# EUROPEAN PATENT SPECIFICATION

(11) **EP 3 680 978 B1**
(45) Date of publication and mention of the grant of the patent: **09.07.2025**
(21) Application number: 18874410.6
(22) Date of filing: 05.10.2018
(51) Int. Cl.: H01M 50/466, H01M 50/469, H01M 50/463, H01M 10/08

(54) **LEAD STORAGE BATTERY**
BLEIAKKUMULATOR
ACCUMULATEUR AU PLOMB

(30) Priority: 31.10.2017 JP 2017211364
(43) Date of publication of application: 15.07.2020
(73) Proprietor: GS Yuasa International Ltd., Kyoto-shi, Kyoto 601-8520 (JP)
(72) Inventor: KYO, Masaaki, Kyoto-shi Kyoto 601-8520 (JP); WADA, Hidetoshi, Kyoto-shi Kyoto 601-8520 (JP); INAGAKI, Satoshi, Kyoto-shi Kyoto 601-8520 (JP)
(74) Representative: Isarpatent
(86) International application number: PCT/JP2018/037305
(87) International publication number: WO 2019/087686

(56) References cited:
- WO-A1-2014/128803
- WO-A1-2016/114316
- WO-A1-2016/204049
- JP-A- 2012 079 432
- JP-A- 2015 079 734
- JP-A- H07 105 929
- JP-A- H07 105 929

## Description

### TECHNICAL FIELD

The present invention relates to a lead-acid battery.

### BACKGROUND ART

Lead-acid batteries are being used for various uses in addition to in-vehicle and industrial uses. The lead-acid battery includes a negative electrode plate, a positive electrode plate, a separator interposed between the negative electrode plate and the positive electrode plate, and an electrolyte solution. Generally, a sulfuric acid aqueous solution is used as the electrolyte solution.

Patent Document 1 describes a lead-acid battery that is a flooded-type lead-acid battery with a utilization factor of the electrolyte solution being 75% or more, and in which a concentration of alkali metal ions or alkaline earth metal ions in the electrolyte solution is 0.07 to 0.3 mol/L, and a pore volume of negative electrode material is 0.08 to 0.16 mL/g.

Patent Document 2 describes that when the sum of an amount of a positive active material to fill the positive electrode plate and an amount of the negative active material to fill the negative electrode plate is A, and an amount of sulfuric acid contained in the electrolyte solution is B (initial state of full charge and no progress of degradation), deposition of needle crystal on metallic lead in the negative electrode is prevented while a certain relational expression is satisfied between a ratio (Y = B/A) of A and B and the density of the positive active material X (g/cm³).

### PRIOR ART DOCUMENTS

### PATENT DOCUMENTS

Patent Document 1: WO 2014/128803 A
Patent Document 2: JP-A-2000-130516

### SUMMARY OF THE INVENTION

### PROBLEMS TO BE SOLVED BY THE INVENTION

The lead-acid battery is sometimes used in a poor charged state called a partial state of charge (PSOC). For example, the lead-acid battery is used in the PSOC during charge control or idling stop-start (ISS). Therefore, the lead-acid battery is required to be excellent in life performance in a cycle test under PSOC conditions (hereinafter referred to as PSOC life performance).

When the lead-acid battery is used in the PSOC state, stratification of the electrolyte solution progresses, and softening of a positive active material and accumulation (sulfation) of lead sulfate in positive and negative active materials are promoted, to shorten the life. In addition, by the lead-acid battery being used in the stratified state for a long period of time, lead ions dissolved in the electrolyte solution are reduced on the negative electrode side, and the precipitated lead crystal may permeate the separator, causing a permeation short circuit.

In a battery for idling stop (IS), the amount of the positive and negative active material is increased in order to ensure high capacity, softening resistance of the positive electrode plate, and sulfation resistance of the negative electrode plate. In that case, the amount of the electrolyte solution becomes relatively small. When the amount of the electrolyte solution is small relative to the active material, the specific gravity of the electrolyte solution extremely decreases during overdischarge, and the permeation short circuit easily occurs.

As a method of preventing the permeation short circuit, it is known to add metal ions such as Na and Al to the electrolyte solution. However, in a battery having a relatively small amount of the electrolyte solution, a sufficient effect cannot be obtained, and the increase in the amount of the metal ions lowers the charge acceptability and promotes sulfation, so that it is difficult to increase the content of the metal ions more than the current state.

### MEANS FOR SOLVING THE PROBLEMS

One aspect of the present invention relates to a lead-acid battery including: a positive electrode plate; a negative electrode plate; a separator interposed between the positive electrode plate and the negative electrode plate; and an electrolyte solution. 0.03 to 0.3 mol/L of Na and/or 0.02 to 0.2 mol/L of Al are contained in the electrolyte solution, the separator includes a first rib on the negative electrode plate side, and a rib parameter Q expressed by Q = U/(h^{1/2}) is 300 or less, where a height of the first rib protruding from a main surface of the separator is h (mm) and a utilization factor of the electrolyte solution is U (%).

### ADVANTAGES OF THE INVENTION

In the lead-acid battery, a permeation short circuit is prevented, and excellent PSOC life performance is obtained.

### BRIEF DESCRIPTION OF THE DRAWINGS

Fig. 1 is an exploded perspective view showing an external appearance and an internal structure of a lead-acid battery, which is partially cut off, according to one aspect of the present invention.
Fig. 2 is a graph showing a relationship between a rib parameter and a permeation-short-circuit occurrence probability.

### MODES FOR CARRYING OUT THE INVENTION

A lead-acid battery according to one aspect of the present invention includes a positive electrode plate, a negative electrode plate, a separator interposed between the positive electrode plate and the negative electrode plate, and an electrolyte solution, and 0.03 to 0.3 mol/L of Na and/or 0.02 to 0.2 mol/L of Al are contained in the electrolyte solution. The separator has a first rib on the negative electrode plate side. A rib parameter Q expressed by Q = U/(h^{1/2}) is 300 or less, where a height of the first rib protruding from a main surface of the separator is h (mm) and a utilization factor of the electrolyte solution is U (%).

Here, the utilization factor (hereinafter sometimes referred to as a "solution utilization factor") U of the electrolyte solution means a value obtained by calculating a theoretical solution capacity (amount of sulfate radical (g)/3.657) from the amount of sulfate radical measured from the amount of the solution and the concentration in a cell chamber, and dividing 20-hour rate capacity by the obtained theoretical solution capacity.

A method for calculating the solution utilization factor will be described below. In a fully charged battery, the electrode group is taken out of a single cell containing the electrolyte solution, washed with water and dried to remove sulfuric acid. Whether or not the sulfuric acid has been removed can be confirmed with a pH test paper or the like. When washing with water takes time, the electrode group may be cut into the positive electrode plate, the negative electrode plate, the separator, and a lead connection part, and each may be washed with water and dried. A value obtained by subtracting the masses of the electrode group, a container, and a lid after the washing and drying for the single cell from the mass of the single cell containing the electrolyte solution is defined as the amount of the electrolyte solution of the single cell.

Next, the specific gravity of the electrolyte solution is measured, and the amount of sulfate radical is calculated from the amount of the electrolyte solution and the measured specific gravity. The calculated amount of sulfate radical (g) is divided by 3.657 to obtain a theoretical solution capacity (Ah), and a value obtained by dividing the 20-hour rate capacity by the obtained theoretical solution capacity is defined as the utilization factor of the electrolyte solution. The 20-hour rate capacity is obtained based on SBA S 0101:2014.

The height (height of the first rib) h of the first rib protruding from the main surface of the separator is obtained by averaging the heights of a plurality of first ribs provided in a region of the main surface of the separator facing the negative electrode plate.

The rib parameter Q is expressed as a value obtained by dividing the solution utilization factor U by the square root of the height h of the first rib. The higher the solution utilization factor U and the smaller the height h of the first rib, the more easily the permeation short circuit occurs in an environment. At this time, the rib parameter Q increases. Therefore, the smaller the rib parameter Q is made, the more the permeation short circuit is prevented.

However, the inventors of the present application have found that the permeation short circuit is dramatically prevented regardless of the solution utilization factor not by simply dividing the solution utilization factor U by the height h of the first rib but by limiting the rib parameter Q, obtained by dividing the solution utilization factor U (%) by the square root of the height h (mm) of the first rib, to a certain value or less (300 or less).

In the lead-acid battery, during discharge, lead sulfate is generated at both the positive electrode and the negative electrode, and water is generated at the positive electrode. On the other hand, at the time of charge, metallic lead, lead dioxide, and sulfuric acid are generated from lead sulfate and water.

When the battery is used in a poor charged state, the accumulated amount of lead sulfate inevitably increases at the end of the PSOC life, so that the specific gravity of the electrolyte solution decreases. The decrease in the specific gravity of the electrolyte solution is particularly remarkable during overdischarge. When the electrolyte solution is not sufficiently stirred during charge, a difference in the concentration of sulfuric acid occurs between the upper and lower portions of the electrolyte solution (stratification occurs). When the use is continued in such an environment, a permeation short circuit is likely to occur in the upper portion where the specific gravity of the electrolyte solution is low.

The separator includes a first rib provided on the negative electrode plate side. The first rib prevents the separator from closely contacting the negative electrode plate, and ensures space for holding the electrolyte solution between the negative electrode plate and the separator. The first rib can enhance the diffusivity of the electrolyte solution to prevent the permeation short circuit. As a result, a lead-acid battery with excellent PSOC life performance can be achieved.

As the height of the first rib is increased, the effect of preventing the permeation short circuit enhances. By determining the height of the first rib so that the rib parameter Q is equal to or less than a certain value (300 or less) in accordance with the solution utilization factor, it is possible to effectively prevent the permeation short circuit.

The first rib maintains the diffusivity of the electrolyte solution near the negative electrode during both charge and discharge to prevent a decrease in charge-discharge performance. The first rib improves the diffusivity of the electrolyte solution near the negative electrode plate, so that a decrease in specific gravity of the electrolyte solution near the negative electrode during discharge is prevented, and the decrease in discharge performance is prevented. Further, the accumulation of lead sulfate is prevented. During charge, sulfuric acid released from the negative electrode plate can be diffused into the space between the negative electrode plate and the separator to prevent an increase in specific gravity of the electrolyte solution near the negative electrode is prevented, thereby improving the charge efficiency.

The electrolyte solution contains 0.03 to 0.3 mol/L of Na and/or 0.02 to 0.2 mol/L of Al.

The addition of Na, K, Mg, or Al to the electrolyte solution has an effect of preventing the permeation short circuit and enhancing the charge recoverability from the state of being left under overdischarge. On the other hand, the addition of Na, K, or Mg causes a decrease in charge acceptability and facilitates the accumulation (sulfation) of lead sulfate in the negative electrode.

When the electrolyte solution contains Na, the Na content is preferably from 0.03 to 0.3 mol/L. By setting the Na content to 0.03 mol/L or more, the effect of preventing the permeation short circuit can be obtained. On the other hand, from the viewpoint of preventing the accumulation of lead sulfate, the Na content is preferably set to 0.3 mol/L or less.

Similarly, when the electrolyte solution contains Al, the Al content is preferably from 0.02 to 0.2 mol/L. By setting the Al content to 0.02 mol/L or more, the effect of preventing the permeation short circuit and the effect of preventing the accumulation of lead sulfate can be obtained. On the other hand, from the viewpoint of preventing the decrease in discharge performance, the Al content is preferably set to 0.2 mol/L or less.

The electrolyte solution may contain an alkali metal ion such as Li or an alkaline earth metal ion, in addition to Na and/or Al. The content of Na, Al, or other metal ions in the electrolyte solution can be obtained by disassembling a chemically converted, fully charged lead-acid battery, extracting the electrolyte solution, and performing inductively coupled plasma (ICP) emission analysis. More specifically, atomic absorption measurement is performed using an ICP emission spectrometer (ICPS-8000, manufactured by Shimadzu Corporation), and the concentration of metal ions is obtained from a calibration curve.

The smaller the value of the rib parameter, the larger the effect of preventing the permeation short circuit, but the larger the required height of the first rib. However, in order to maintain the same performance while increasing the height of the first rib, it cannot help that the total thickness of the separator (the thickness obtained by adding the height of the rib to the thickness of the base) is increased, or in a case where the total thickness of the separator is not changed, the height of the rib (second rib) provided on the positive electrode plate side is decreased. Increasing the total thickness of the separator causes a decrease in capacity and is thus difficult to employ in a battery for IS that uses an electrode group in which a large number of positive and negative electrode plates are stacked. On the other hand, lowering the rib on the positive electrode side causes the oxidation degradation of the separator to facilitate shortening of life.

However, so long as the rib parameter is in the range of 150 or more, the effect of preventing the permeation short circuit can be maximized in the battery for IS without causing the decrease in capacity or the oxidation degradation of the separator.

According to one aspect of the present invention, 0.03 to 0.3 mol/L of Na and/or 0.02 to 0.2 mol/L of Al are contained in the electrolyte solution, the first rib is provided on the negative electrode plate side, and the height of the first ribs is controlled in accordance with the solution utilization factor so that the rib parameter is within a certain range, whereby it is possible to effectively prevent the permeation short circuit. The minimum height of the first rib necessary for preventing the permeation short circuit can be obtained in accordance with the solution utilization factor, thus facilitating the design of the lead-acid battery for IS. The solution utilization factor U is preferably in the range of 70% to 90%.

The separator may further include a second rib provided on the positive electrode plate side. The second rib prevents the separator from closely contacting the positive electrode plate. The second rib improves the diffusivity of the electrolyte solution near the positive electrode plate and can prevent the oxidation degradation of the separator, thus further improving the PSOC life performance.

The separator may have a bag shape. When a bag-shaped separator is used, the electrolyte solution is likely to stay. However, by providing the first rib and the second rib, the diffusivity of the electrolyte solution in the separator increases, and the PSOC life performance can be further improved. At the positive electrode, water is generated during discharge, and hence the specific gravity of the electrolyte solution near the positive electrode plate changes more than near the negative electrode plate. However, the storage of the positive electrode plate in the bag-shaped separator enhances the diffusivity of the electrolyte solution near the positive electrode plate and facilitates preventing the stratification of the electrolyte solution. Meanwhile, when the bag-shaped separator stores the negative electrode plate, a short circuit due to extension of a positive electrode grid is easily prevented. Further, the formation of the first rib in the bag increases the diffusivity of the electrolyte solution near the negative electrode plate to easily prevent the stratification.

The lead-acid battery may include a fiber mat interposed between the positive electrode plate and the negative electrode plate. When the fiber mat is provided, the electrode plate is pressed by the fiber mat to decrease the amount of electrolyte solution around the electrode plate and also decrease the diffusivity. However, by providing the first rib at least on the negative electrode plate side of the separator, even when the fiber mat is provided, the electrolyte solution can be held near the negative electrode plate and the diffusivity of the electrolyte solution can be improved.

In the present specification, the fully charged state of the lead-acid battery is a state where, in the case of a flooded-type battery, in a water bath at 25°C, constant current charge is performed at a current of 0.2 CA to reach 2.5 V/cell, and then the constant current charge is further performed at 0.2 CA for two hours. In the case of a valve regulated battery, the fully charged state is a state where a constant current constant voltage charge of 2.23 V/cell is performed at 0.2 CAin an air tank at 25°C, and the charge is ended at the point when the charge current at the time of constant voltage charge becomes 1 mCA or lower.

In the present specification, 1 CA is a current value (A) having the same numerical value as the nominal capacity (Ah) of the battery. For example, when the battery has a nominal capacity of 30 Ah, 1 CAis 30 A, and 1 mCA is 30 mA.

Hereinafter, the lead-acid battery according to the embodiment of the present invention will be described for each of the main components, but the present invention is not limited to the following embodiment.

### (Separator)

The separator includes a base made of a microporous film and a rib protruding from one main surface of the base. More preferably, a rib protruding from the other main surface of the base may be further provided. The rib protruding from one main surface of the base is disposed so as to be located on the negative electrode plate side. The rib located on the negative electrode plate side is called a first rib. The rib protruding from the other main surface of the base is disposed on the positive electrode plate side (i.e., so as to face the positive electrode plate). The rib located on the positive electrode plate side is called a second rib. The first rib can enhance the diffusivity of the electrolyte solution near the negative electrode plate, so that the PSOC life performance can be further improved and the permeation short circuit can be prevented.

The separator is formed from a polymer material. At least the base is a porous sheet and can also be called a porous film. The separator may include a filler (e.g., a particulate filler such as silica, and/or a fibrous filler) that is dispersed in a matrix formed using a polymer material. The separator is preferably made of a polymer material having acid resistance. As such a polymer material, a polyolefin such as polyethylene or polypropylene is preferred.

The average pore size of the base of the separator is, for example, 0.01 µm or more and 0.5 µm or less, and preferably 0.03 µm or more and 0.3 µm or less. When the average pore size is in such a range, both low electric resistance and excellent short-circuit resistance can be achieved, which is advantageous.

The average pore size of the separator can be obtained by mercury porosimetry. More specifically, the separator is put into a measurement container, which is evacuated and then filled with mercury by applying pressure. A pore distribution is obtained from the relationship between the pressure at this time and the volume of mercury pushed into the separator, and from this pore distribution, the average pore size is obtained. For measurement of the average pore size, an automatic porosimeter (Autopore IV9505) manufactured by Shimadzu Corporation is used.

The average thickness of the base is, for example, 100 µm or more and 300 µm or less, and preferably 150 µm or more and 250 µm or less. When the average thickness of the base is in such a range, the height of the first rib, as well as the height of the second rib if necessary, can be easily ensured while the capacity is kept high.

The average thickness of the base is obtained by measuring the thickness of the base at five freely selected locations in a cross-sectional photograph of the separator and averaging the measured thickness.

The first rib is formed on the surface of the separator facing the negative electrode plate.

The average height of the first ribs is determined in accordance with the solution utilization factor U so that the rib parameter Q described above is equal to or less than a certain value. So long as the rib parameter Q satisfies the above condition, the average height of the first rib is, for example, 0.05 mm or more, and preferably 0.07 mm or more. When the average height of the first rib is in such a range, the electrolyte solution is more easily diffused. From the viewpoint of ensuring a high capacity, so long as the rib parameter Q satisfies the above condition, the average height of the first rib is, for example, 0.40 mm or less, and preferably 0.20 mm or less. Any combination of these lower and upper limits is possible.

Note that the height of the first rib refers to a distance from one main surface of the base to the top of the first rib at a predetermined position of the first rib. In a case where the main surface of the base is not flat, the height of the first rib is assumed to be the distance from the highest position of one main surface of the base to the top of the first rib at a predetermined position of the first rib when the separator is placed flat with the first rib side facing up. The average height of the first ribs is obtained by averaging the heights of the first ribs measured at ten freely selected locations of the first ribs on one main surface of the base.

The pattern of the first rib on one main surface of the base is not particularly limited, and the first rib may be formed at random or may be formed in a stripe shape, a curved shape, a grid shape, or the like. From the viewpoint of making the electrolyte solution more easily diffused, it is preferable to form a plurality of first ribs on one main surface of the base so as to be arranged in stripes. The orientation of the stripe-shaped first ribs is not particularly limited, and for example, the plurality of first ribs may be formed along the height direction or the width direction of the negative electrode plate. A difference is likely to be produced in specific gravity of the electrolyte solution between the upper and lower portions of the electrode plate, it is thus preferable to form the plurality of first ribs in a stripe shape along the height direction of the negative electrode plate from the viewpoint of further increasing the diffusivity of the electrolyte solution.

Note that a lug for extracting current from the electrode group is usually formed at one end of each of the negative electrode plate and the positive electrode plate. The vertical direction of the negative electrode plate or the positive electrode plate with the lug directed upward is referred to as the height direction of the negative electrode plate or the positive electrode plate. The width direction of the negative electrode plate or the positive electrode plate is a direction orthogonal to the height direction and crossing the main surface of the negative electrode plate or the positive electrode plate.

The pitch of the stripe-shaped or grid-shaped first ribs is, for example, 0.3 mm or more and 10 mm or less, and preferably 0.5 mm or more and 5 mm or less. When the separator includes a region in which the first ribs are formed at a pitch in such a range, an effect of improving the diffusivity of the electrolyte solution near the negative electrode plate is easily obtained. In the separator, the first ribs are preferably formed at such a pitch in a region facing the negative electrode plate. For example, the first ribs having such a pitch are preferably formed in 70% or more of the area of the region facing the negative electrode plate. In a region not facing the negative electrode plate, such as the end of the separator, the first rib may or may not be formed, and a plurality of first ribs may be formed densely (e.g., at an average pitch of 0.5 mm or more and 5 mm or less).

Note that the pitch of the first ribs is the distance between the tops of the adjacent first ribs (more specifically, the distance between the centers of the adjacent first ribs in a direction crossing the first ribs).

The average pitch of the first ribs is obtained by averaging the pitches of the first ribs measured at ten freely selected locations. When the first ribs are densely formed in a region not facing the negative electrode plate, the average pitch may be calculated excluding this region. The average pitch of the first ribs in the region not facing the negative electrode plate can be calculated for this region similarly to the above.

The second rib is formed on the surface of the separator facing the positive electrode plate. The average height of the second rib is, for example, 0.3 mm or more, and preferably 0.4 mm or more. When the average height of the second rib is within such a range, the oxidation degradation of the separator is easily prevented. From the viewpoint of ensuring a high capacity, the average height of the second rib is, for example, 1.0 mm or less, and may be 0.7 mm or less. Any combination of these lower and upper limits is possible.

The average height of the second rib is obtained according to the case of the first rib. The height of the second rib refers to a distance from the other main surface of the base to the top of the second rib at a predetermined position of the second rib, according to the case of the first rib

The pattern and the orientation of the second rib are not particularly limited and may be selected, for example, from those described for the first rib. The pitch of the stripe-shaped or grid-shaped second rib is, for example, 1 mm or more and 15 mm or less, and preferably 5 mm or more and 10 mm or less. When the separator includes a region where the second ribs are formed at a pitch in such a range, the effect of preventing the oxidation degradation of the separator is further enhanced. In the separator, the second ribs are preferably formed at such a pitch in a region facing the positive electrode plate. For example, the second ribs having such a pitch are preferably formed in 70% or more of the area of the region facing the positive electrode plate. In a region not facing the positive electrode plate, such as the end of the separator, the second rib may or may not be formed, and a plurality of second ribs may be formed densely (e.g., at an average pitch of 0.5 mm or more and 5 mm or less).

Note that the pitch of the second ribs is the distance between the tops of the adjacent second ribs (more specifically, the distance between the centers of the adjacent second ribs in a direction crossing the second rib). The average pitch of the second ribs can be calculated according to the average pitch of the first ribs.

The sheet-shaped separator may be sandwiched between the negative electrode plate and the positive electrode plate, or the separator may be interposed between the negative electrode plate and the positive electrode plate by storing the negative electrode plate or the positive electrode plate in the bag-like separator. When a bag-shaped separator is used, the electrolyte solution is hardly diffused, but the provision of the first rib and the second rib improves the diffusivity. When the negative electrode plate is stored in the bag-shaped separator, the first ribs can easily enhance the diffusivity of the electrolyte solution near the negative electrode plate and can prevent a short circuit caused by separator breakage even when the positive electrode current collector extends. When the positive electrode plate is stored in the bag-shaped separator, the stratification of the electrolyte solution is easily prevented.

The separator is obtained by, for example, extruding a resin composition containing a pore-forming additive (a solid pore-forming additive such as a polymer powder, and/or a liquid pore-forming additive such as an oil), a polymer material, and the like to be molded into a sheet shape, and then removing the pore-forming additive to form pores in the matrix of the polymer material. The rib may be formed, for example, at the time of the extrusion molding, or may be formed by performing the press with a roller having a groove corresponding to the rib after the molding into the sheet shape or the removal of the pore-forming additive. When a filler is used, the filler is preferably added to the resin composition.

### (Electrolyte solution)

The electrolyte solution contains sulfuric acid in the aqueous solution. The electrolyte solution may be gelled if necessary. The electrolyte solution may contain an additive used for a lead-acid battery, if necessary.

In the present embodiment, the electrolyte solution contains Na at a concentration of 0.03 to 0.3 mol/L and/or Al at a concentration of 0.02 to 0.2 mol/L.

The specific gravity at 20°C of the electrolyte solution in a fully charged lead-acid battery after chemical conversion is, for example, 1.10 g/cm³ or more and 1.35 g/cm³ or less.

### (Positive electrode plate)

There are a paste type and a clad type in the positive electrode plate of the lead-acid battery.

The paste-type positive electrode plate includes a positive electrode current collector and a positive electrode material. The positive electrode material is held in the positive electrode current collector. In the paste-type positive electrode plate, the positive electrode material is a material with the positive electrode current collector removed from the positive electrode plate. The positive electrode current collector may be formed similarly to the negative electrode current collector, and can be formed by casting lead or a lead alloy or processing a lead or lead alloy sheet.

The clad-type positive electrode plate includes a plurality of porous tubes, a spine inserted into each tube, a positive electrode material with which a spine inserted tube is filled, and a joint that joins the plurality of tubes. In the clad-type positive electrode plate, the positive electrode material is a material with the tube, the spine, and the joint removed from the positive electrode plate.

As a lead alloy used for the positive electrode current collector, a Pb-Ca-based alloy and a Pb-Ca-Sn-based alloy are preferred in terms of corrosion resistance and mechanical strength. The positive electrode current collector may have a lead alloy layer with a different composition, and a plurality of alloy layers may be provided. It is preferable to use a Pb-Ca-based alloy or a Pb-Sb-based alloy for the spine.

The positive electrode material contains a positive active material (lead dioxide or lead sulfate) that develops a capacity through an oxidation-reduction reaction. The positive electrode material may contain other additives if necessary.

A non-chemically converted paste-type positive electrode plate is obtained in such a manner that a positive electrode current collector is filled with a positive electrode paste, which is then cured and dried, according to the case of the negative electrode plate. Thereafter, a non-chemically converted positive electrode plate is chemically converted. The positive electrode paste is prepared by kneading lead powder, an additive, water, and sulfuric acid.

A non-chemically converted clad-type positive electrode plate is formed by mixing an additive and lead powder or slurry-like lead powder in a spine inserted tube, filling the mixture, and joining a plurality of tubes with a joint.

### (Negative electrode plate)

The negative electrode plate of the lead-acid battery includes a negative electrode material. Normally, the negative electrode plate of the lead-acid battery is made up of a negative electrode current collector and a negative electrode material. The negative electrode material is a material obtained with the negative electrode current collector removed from the negative electrode plate. The negative electrode current collector may be formed by casting lead (Pb) or a lead alloy or may be formed by processing a lead or lead alloy sheet. Examples of the processing method include an expanding process and a punching process. The use of a negative electrode grid as the negative electrode current collector is preferred because the negative electrode material is easily supported.

The lead alloy used for the negative electrode current collector may be any of a Pb-Sb-based alloy, a Pb-Ca-based alloy, and a Pb-Ca-Sn-based alloy. The lead or lead alloys may further contain, as an additive element, at least one selected from the group consisting of Ba, Ag, Al, Bi, As, Se, Cu, and the like.

The negative electrode material contains a negative active material (lead or lead sulfate) that develops a capacity through an oxidation-reduction reaction. The negative electrode material may contain an expander, a carbonaceous material such as carbon black, barium sulfate, or the like, and may contain other additives. Sodium lignosulfonate, a bisphenol compound, or the like can be used as the organic expander.

The negative active material in a charged state is spongy lead, whereas a non-chemically converted negative electrode plate is usually produced using lead powder.

The negative electrode material can include carbon particles as an additive. The carbon particles normally have conductivity. Examples of the carbon particles include carbon black, graphite, hard carbon, and soft carbon. Examples of the carbon black include acetylene black, furnace black, channel black, and lamp black. As graphite, any carbon material including a graphite type crystal structure may be used, and any of artificial graphite and natural graphite may be used. The negative electrode material may contain one kind of these carbon particles, or may contain two or more kinds thereof.

The carbon particles preferably include carbon particles (first carbon particles) having a particle size smaller than the average pore size of the separator.

The first carbon particles preferably include carbon black. The first carbon particles such as carbon black easily flow out into the electrolyte solution. However, even when the first carbon particles flow out into the electrolyte solution, the action of the first rib can prevent the pores of the separator from being blocked by the carbon particles such as carbon black. Using the first carbon particles such as carbon black facilitates forming a more uniform conductive network in the negative electrode material.

The content of the carbon particles contained in the negative electrode material is, for example, 0.2% by mass or more 3.0% by mass or less, and preferably 0.3% by mass or more 2.5% by mass or less. When the content of the carbon particles is in such a range, the conductive network is likely to spread while ensuring a high capacity.

The negative electrode plate can be formed in such a manner that a negative electrode current collector is filled with a negative electrode paste, which is then cured and dried to prepare a non-chemically converted negative electrode plate, and then the non-chemically converted negative electrode plate is chemically converted. The negative electrode paste is prepared by adding water and sulfuric acid to the lead powder, the organic expander, and various additives if necessary, and mixing these. In the curing step, it is preferable to cure the non-chemically converted negative electrode plate at a temperature higher than room temperature and with high humidity.

The chemical conversion can be performed by charging the electrode group in a state where the electrode group including the non-chemically converted negative electrode plate is immersed in the electrolyte solution containing sulfuric acid in the container of the lead-acid battery. However, the chemical conversion may be performed before the lead-acid battery or the electrode group is assembled. The chemical conversion produces spongy lead.

### (Fiber mat)

The lead-acid battery may further include a fiber mat interposed between the positive electrode plate and the negative electrode plate. When the fiber mat is disposed, the electrode plate is pressed by the fiber mat, and it becomes difficult to hold the electrolyte solution around the electrode plate. In the above aspect of the present invention, the first rib is provided on the separator, so that the electrolyte solution can be easily ensured near the negative electrode plate, and high diffusivity of the electrolyte solution can be ensured.

The fiber mat is different from the separator and is made of a sheet-shaped fiber aggregate. As such a fiber aggregate, a sheet in which fibers insoluble in the electrolyte solution are entangled is used. Such sheets include, for example, nonwoven fabrics, woven fabrics, knits, and the like.

As the fibers, it is possible to use glass fibers, polymer fibers (polyolefin fibers, acrylic fibers, polyester fibers such as polyethylene terephthalate fibers, etc.), pulp fibers, and the like. Among the polymer fibers, polyolefin fibers are preferred.

The fiber mat may contain components in addition to the fibers, such as an acid-resistant inorganic powder and a polymer as a binder. As the inorganic powder, it is possible to use silica powder, glass powder, diatomaceous earth, and the like. However, the fiber mat is mainly composed of the fibers. For example, 60% by mass or more of the fiber mat is formed using the fibers.

The fiber mat may be disposed between the negative electrode plate and the positive electrode plate. With the separator being also disposed between the negative electrode plate and the positive electrode plate, the fiber mat may be provided between the negative electrode plate and the positive electrode plate, for example, between the negative electrode plate and the separator, and/or between the separator and the positive electrode plate. From the viewpoint of preventing the stratification of the electrolyte solution, the fiber mat is preferably disposed so as to be in contact with the negative electrode plate. In addition, from the viewpoint of preventing the softening and falling of the positive electrode material, it is preferable to dispose the fiber mat so as to be in contact with the positive electrode plate. From the viewpoint of enhancing an effect of preventing the softening and falling, it is preferable to dispose the fiber mat in the state of being pressed against the positive electrode plate, but in this case, the electrolyte solution near the negative electrode plate is likely to be insufficient. In the present embodiment, since the first ribs are provided on the surface of the separator facing the negative electrode plate, even when the fiber mat is disposed on the positive electrode plate side, the electrolyte solution can be ensured near the negative electrode plate.

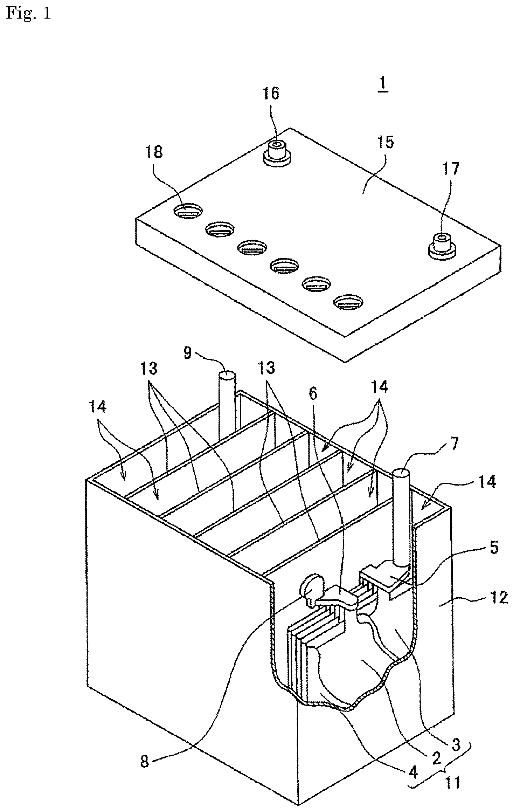

Fig. 1 shows an external view of an example of a lead-acid battery according to an embodiment of the present invention.

A lead-acid battery 1 includes a container 12 storing an electrode group 11 and an electrolyte solution (not shown). The inside of the container 12 is partitioned into a plurality of cell chambers 14 by partitions 13. In each cell chamber 14, one electrode group 11 is stored. The opening of the container 12 is closed with a lid 15 having a negative electrode terminal 16 and a positive electrode terminal 17. The lid 15 is provided with a vent plug 18 for each cell chamber. At the time of water addition, the vent plug 18 is removed, and a water addition liquid is supplied. The vent plug 18 may have a function of discharging gas generated in the cell chamber 14 to the outside of the battery.

The electrode group 11 is configured by stacking a plurality of negative electrode plates 2 and positive electrode plates 3 with a separator 4 interposed therebetween. Here, the bag-shaped separator 4 storing the negative electrode plate 2 is shown, but the form of the separator is not particularly limited. In the cell chamber 14 located at one end of the container 12, a negative electrode shelf 6 for connecting the plurality of negative electrode plates 2 in parallel is connected to a through-connector 8, and a positive electrode shelf 5 for connecting the plurality of positive electrode plates 3 in parallel is connected to a positive electrode pole 7. The positive electrode pole 7 is connected to the positive electrode terminal 17 outside the lid 15. In the cell chamber 14 located at the other end of the container 12, the negative electrode pole 9 is connected to the negative electrode shelf 6, and the through-connector 8 is connected to the positive electrode shelf 5. The negative electrode pole 9 is connected to the negative electrode terminal 16 outside the lid 15. Each through-connector 8 passes through a through-hole provided in the partition 13 and connects the electrode groups 11 of the adjacent cell chambers 14 in series.

### [Example]

Hereinafter, the present invention will be specifically described based on examples and comparative examples, but the present invention is not limited to the following examples.

### <Lead-acid battery A1>

### (1) Preparation of negative electrode plate

A negative electrode paste was prepared by mixing lead powder, water, sulfuric acid, carbon, barium sulfate (BaSO₄), tin sulfate (SnSO₄), an organic expander, and a reinforcing material (fibers for plastering). A mesh of an expanded grid (number of grid steps: 14.5) made of a Pb-Ca-Sn-based alloy as a negative electrode current collector was filled with the negative electrode paste, which was then cured and dried to obtain a non-chemically converted negative electrode plate. Sodium lignin sulfonate was used as the organic expander.

The size of the negative electrode plate was 100 mm in width × 112 mm in height.

### (2) Preparation of positive electrode plate

A positive electrode paste was prepared by mixing lead powder, water, sulfuric acid, antimony trioxide (Sb₂O₃), tin sulfate (SnSO₄), and a reinforcing material. A mesh of an expanded grid (number of grid steps: 14) made of a Pb-Ca-Sn-based alloy as a positive electrode current collector was filled with the positive electrode paste, which was then cured and dried to obtain a non-chemically converted positive electrode plate.

The size of the positive electrode plate was 100 mm in width × 112 mm in height.

### (3) Preparation of lead-acid battery

Each non-chemically converted negative electrode plate was stored into a bag-shaped separator (width 115 mm × height 115 mm) formed using a polyethylene microporous film, and an electrode group was formed using seven non-chemically converted negative electrode plates and six non-chemically converted positive electrode plates per cell. The separator had a plurality of first ribs on a stripe inside the bag and had a plurality of striped second ribs outside the bag. The plurality of first ribs were each formed along the width direction of the negative electrode plate, and the average height of the first ribs in a region facing the negative electrode plate was 0.1 mm. The plurality of second ribs were each formed along the height direction of the positive electrode plate, the average height of the second ribs was 0.7 mm, and the pitch of the second ribs in a region facing the positive electrode plate was 10 mm. The average thickness of the base of the separator was 0.2 mm. The total thickness of the separator was 1.0 mm. The average pore size of the separator was 0.1 µm.

The electrode group was inserted into a cell chamber of a container made of polypropylene, the container was filled with an electrolyte solution, and chemical conversion was performed in the container, to assemble a flooded-type lead-acid battery A1 having a nominal voltage of 12 V and a nominal capacity of 40 Ah (20-hour rate). As the electrolyte solution, a solution, obtained by adding 0.1 mol/L of Na to an aqueous solution containing sulfuric acid and having a specific gravity of 1.28 at 20°C, was used. The amount of the electrolyte solution was 520 g/cell, of which the amount occupied by sulfuric acid was 196 g/cell. When the theoretical capacity of the lead-acid battery was obtained based on the amount of sulfuric acid in the electrolyte solution, the obtained value was 53.5 Ah/cell. The 20-hour rate capacity was 43.0 Ah/cell. Therefore, the solution utilization factor U is calculated as 80%. Note that the solution utilization factor was determined by rounding off the third decimal place (rounding the first decimal place of the solution utilization factor in % units).

From the height h (mm) of the first rib and the solution utilization factor U (%), the rib parameter Q was estimated to be about 250.

The thickness of the positive electrode plate after the chemical conversion was 1.60 mm. The sheet thickness (which is the thickness of the non-deployed portion of the expanded grid, for example, the thickness of the lug and the frame) was 1.10 mm.

The mass of the positive electrode plate after the chemical conversion was 93.0 g/sheet excluding the lugs, of which the mass occupied by the positive electrode grid was 37.0 g/sheet excluding the lugs, and the mass occupied by the positive active material was 56.0 g (336 g/cell). When the theoretical capacity of the lead-acid battery was obtained based on the amount of the positive active material, the obtained value was 75.3 Ah/cell. The density of the positive electrode material was 4.00 g/mL, and the specific surface area and the pore volume of the positive electrode material were 6.80 m²/g and 0.14 mL/g, respectively.

In the positive electrode material, antimony oxide, tin sulfate, and the reinforcing material were contained at 0.035% by mass, 0.13% by mass, and 0.09% by mass, respectively, with respect to 100% by mass of the positive active material after the chemical conversion. The contents of antimony oxide and tin sulfate are values converted from the contents of Sn and Sb in the positive electrode material, respectively.

The thickness of the negative electrode plate after the chemical conversion was 1.40 mm. The sheet thickness (which is the thickness of the non-deployed portion of the expanded grid, for example, the thickness of the lug and the frame) was 0.90mm.

The mass of the negative electrode plate after the chemical conversion was 75.0 g/sheet excluding the lugs, of which the mass occupied by the negative electrode grid was 32.0 g/sheet excluding the lugs, and the mass occupied by the negative active material was 42.0 g (294 g/cell). When the theoretical capacity of the lead-acid battery was obtained based on the amount of the negative active material, the obtained value was 76.1 Ah/cell. The density of the negative electrode material was 4.10 g/mL, and the specific surface area and the pore volume of the negative electrode material were 0.54 m²/g and 0.12 mL/g, respectively.

In the negative electrode material, carbon, barium sulfate, tin sulfate, and the reinforcing material were contained at 1.5% by mass, 0.9% by mass, 0.020% by mass, and 0.02% by mass, respectively, with respect to 100% by mass of the negative active material after the chemical conversion. Note that the content of tin sulfate is a value converted from the Sn content in the negative electrode material.

Further, ribs for fixing the position of the electrode group in the cell chamber is provided on the inner wall of the cell chamber facing the electrode plate (negative electrode plate) located on the most end side of the electrode group, and the distance between the ribs was 29.0 mm.

### <Lead-acid batteries B1 to B24>

In the manufacturing of the above lead-acid battery, the amount of the electrolyte solution was adjusted to prepare a battery having a solution utilization factor of 70% and a battery having a solution utilization factor of 90%.

Also, by keeping the total thickness of the separator and the thickness of the base constant, and adjusting the heights of the first rib and the second rib, the rib parameter Q was changed in the range of 125 to 400 to produce lead-acid batteries having different rib parameters Q.

In this way, a plurality of lead-acid batteries B1 to B24 having different combinations of the solution utilization factor U and the rib parameter Q were prepared, and the resistance to permeation short circuit was evaluated. Table 1 shows the values of the solution utilization factor and the rib parameter Q of the lead-acid battery used for the evaluation.

### [Evaluation 1: Permeation short circuit]

Under the following conditions, charge and discharge of the lead-acid battery were repeated. Specifically, with (a) to (d) below defined as one cycle, (a) to (d) were performed five cycles at 25°C. After the five cycles, the specific gravity of the electrolyte solution was measured, and the proportion of batteries in which the permeation short circuit had occurred was examined.
(a) Constant current discharge: 0.05 CA (final voltage: 1.0 V/cell)
(b) Constant resistance discharge: connect to a 10-Ω resistor and leave for 28 days.
(c) Constant voltage charge: charge at a limited current of 50 A and a voltage of 2.4 V/cell for ten minutes.
(d) Constant current discharge: discharge at 0.05 CA for 27 hours.

After the completion of five cycles, the specific gravity at the upper part of the electrolyte solution of the lead-acid battery was measured, and when the specific gravity was 1.1 g/cm³ or less, it was determined that the permeation short circuit had occurred.

Twenty lead-acid batteries B1 to B24 were each manufactured, and it was checked whether or not the permeation short circuit had occurred by the above method, and the probability of the occurrence of the permeation short circuit was obtained for each of the lead-acid batteries B1 to B24. Table 1 shows the evaluation results. It can be seen from Table 1 that the permeation-short-circuit occurrence probability sharply increases at a rib parameter Q of 300 regardless of the solution utilization factor.

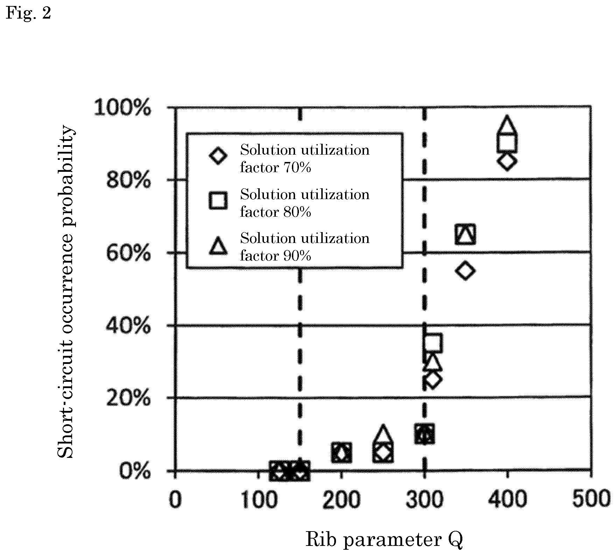

Fig. 2 is a graph of the results of Table 1. According to Fig. 2, when the rib parameter Q is in the range of 300 or less, the increase in the permeation-short-circuit occurrence probability is gradual with respect to the increase in the rib parameter Q, regardless of the solution utilization factor, and the permeation-short-circuit occurrence probability is held at 10% or less. However, when the rib parameter Q exceeds 300, the permeation-short-circuit occurrence probability increases sharply with the increase of the rib parameter Q.

On the other hand, when the rib parameter Q was 150 or less, no permeation short circuit occurred regardless of the solution utilization factor. When the rib parameter Q is less than 150, it cannot help that the height of the first rib is increased accordingly, resulting in a decrease in capacity. In order to maintain the capacity, it is conceivable to decrease the height of the second rib instead of increasing the height of the first rib, but in this case, the oxidation degradation easily occurs in the separator.

By setting the rib parameter Q in the range of 150 or more and 300 or less, it is possible to maximize the effect of preventing the permeation short circuit without decreasing the capacity or shortening the life due to oxidation degradation of the separator.

The above results are the results when the electrolyte solution contains 0.1 mol/L of Na, but similar effects were obtained when the concentration of Na was in the range of 0.03 to 0.3 mol/L. Similar effects were obtained when the electrolyte solution contained Al and the Al concentration was in the range of 0.02 to 0.2 mol/L.

**[Table 1]**

| Lead-acid battery | Solution utilization factor (%) | Rib parameter Q | Short-circuit occurrence probability (%) |
|---|---|---|---|
| B1 | 70 | 125 | 0 |
| B2 | | 150 | 0 |
| B3 | | 200 | 5 |
| B4 | | 250 | 5 |
| B5 | | 300 | 10 |
| B6 | | 310 | 25 |
| B7 | | 350 | 55 |
| B8 | | 400 | 85 |
| B9 | 80 | 125 | 0 |
| B10 | | 150 | 0 |
| B11 | | 200 | 5 |
| B12 | | 250 | 5 |
| B13 | | 300 | 10 |
| B14 | | 310 | 35 |
| B15 | | 350 | 65 |
| B16 | | 400 | 90 |
| B17 | 90 | 125 | 0 |
| B18 | | 150 | 0 |
| B19 | | 200 | 5 |
| B20 | | 250 | 10 |
| B21 | | 300 | 10 |
| B22 | | 310 | 30 |
| B23 | | 350 | 65 |
| B24 | | 400 | 95 |

### INDUSTRIAL APPLICABILITY

The lead-acid battery according to one aspect of the present invention is applicable to a valve regulated lead-acid battery and a flooded-type lead-acid battery, and can be suitably used as a power source for starting an automobile, a motorcycle, or the like.

### DESCRIPTION OF REFERENCE SIGNS

1: lead-acid battery
2: negative electrode plate
3: positive electrode plate
4: separator
5: positive electrode shelf
6: negative electrode shelf
7: positive electrode pole
8: through-connector
9: negative electrode pole
11: electrode group
12: container
13: partition
14: cell chamber
15: lid
16: negative electrode terminal
17: positive electrode terminal
18: vent plug

## Claims

1. A lead-acid battery (1) comprising:
a positive electrode plate (3);
a negative electrode plate (2);
a separator (4) interposed between the positive electrode plate (3) and the negative electrode plate (2); and
an electrolyte solution,
wherein
0.03 to 0.3 mol/L of Na and/or 0.02 to 0.2 mol/L of Al are contained in the electrolyte solution,
the separator (4) includes a first rib on the negative electrode plate side, and
a rib parameter Q expressed by Q = U/(h^{1/2}) is 300 or less, where a height of the first rib protruding from a main surface of the separator is h (mm) and a utilization factor of the electrolyte solution is U (%), and
wherein the height of the first rib h is determined by the method disclosed in the description and the utilization factor of the electrolyte solution U is determined by the method disclosed in the description

2. The lead-acid battery (1) according to claim 1, wherein the rib parameter Q is 150 or more.

3. The lead-acid battery (1) according to claim 1 or 2, wherein the utilization factor of the electrolyte solution is 70% to 90%.

4. The lead-acid battery (1) according to any one of claims 1 to 3, wherein the separator (4) includes a second rib on the positive electrode plate side.

5. The lead-acid battery (1) according to any one of claims 1 to 4, wherein the separator (4) has a bag shape.

6. The lead-acid battery (1) according to claim 5, wherein the separator (4) stores the negative electrode plate (2).

7. The lead-acid battery (1) according to claim 5, wherein the separator (4) stores the positive electrode plate (3).

## Patentansprüche

1. Blei-Säure-Batterie (1), umfassend:
eine positive Elektrodenplatte (3);
eine negative Elektrodenplatte (2);
einen Separator (4), der zwischen der positiven Elektrodenplatte (3) und der negativen Elektrodenplatte (2) angeordnet ist; und
eine Elektrolytlösung,
wobei
0,03 bis 0,3 mol/L Na und/oder 0,02 bis 0,2 mol/L Al sind in der Elektrolytlösung enthalten,
der Separator (4) eine erste Rippe auf der Seite der negativen Elektrodenplatte aufweist, und
ein Rippenparameter Q, ausgedrückt durch Q = U/(h^{1/2}), 300 oder weniger ist, wobei eine Höhe der ersten Rippe, die von einer Hauptoberfläche des Separators vorsteht, h (mm) ist und ein Ausnutzungsfaktor der Elektrolytlösung U (%) ist, und
wobei die Höhe der ersten Rippe h nach dem in der Beschreibung angegebenen Verfahren und der Nutzungsfaktor der Elektrolytlösung U nach dem in der Beschreibung angegebenen Verfahren bestimmt wird.

2. Blei-Säure-Batterie (1) nach Anspruch 1, wobei der Rippenparameter Q 150 oder mehr beträgt.

3. Blei-Säure-Batterie (1) nach Anspruch 1 oder 2, wobei der Nutzungsfaktor der Elektrolytlösung 70 % bis 90 % beträgt.

4. Blei-Säure-Batterie (1) nach einem der Ansprüche 1 bis 3, wobei der Separator (4) eine zweite Rippe auf der Seite der positiven Elektrodenplatte aufweist.

5. Blei-Säure-Batterie (1) nach einem der Ansprüche 1 bis 4, wobei der Separator (4) eine Beutelform aufweist.

6. Blei-Säure-Batterie (1) nach Anspruch 5, wobei der Separator (4) die negative Elektrodenplatte (2) aufnimmt.

7. Blei-Säure-Batterie (1) nach Anspruch 5, wobei der Separator (4) die positive Elektrodenplatte (3) aufnimmt.

## Revendications

1. Batterie plomb-acide (1) comprenant :
une plaque d'électrode positive (3) ;
une plaque d'électrode négative (2) ;
un séparateur (4) interposé entre la plaque d'électrode positive (3) et la plaque d'électrode négative (2) ; et
une solution électrolytique,
dans lequel
la solution électrolytique contient de 0,03 à 0,3 mol/L de Na et/ou de 0,02 à 0,2 mol/L d'Al,
le séparateur (4) comprend une première nervure du côté de la plaque de l'électrode négative, et
un paramètre de nervure Q exprimé par Q = U/(h^{1/2}) est inférieur ou égal à 300, où une hauteur de la première nervure dépassant d'une surface principale du séparateur est h (mm) et un facteur d'utilisation de la solution d'électrolyte est U (%), et
dans lequel la hauteur de la première nervure h est déterminée par la méthode décrite dans la description, et le facteur d'utilisation de la solution d'électrolyte U est déterminé par la méthode décrite dans la description .

2. Batterie plomb-acide (1) selon la revendication 1, dans laquelle le paramètre de nervure Q est égal ou supérieur à 150.

3. Batterie plomb-acide (1) selon la revendication 1 ou 2, dans lequel le facteur d'utilisation de la solution d'électrolyte est compris entre 70% et 90%.

4. Batterie plomb-acide (1) selon l'une des revendications 1 à 3, dans laquelle le séparateur (4) comprend une deuxième nervure du côté de la plaque de l'électrode positive.

5. Batterie plomb-acide (1) selon l'une des revendications 1 à 4, dans laquelle le séparateur (4) a la forme d'un sac.

6. Batterie plomb-acide (1) selon la revendication 5, dans laquelle le séparateur (4) stocke la plaque d'électrode négative (2).

7. Batterie plomb-acide (1) selon la revendication 5, dans laquelle le séparateur (4) stocke la plaque d'électrode positive (3).
